# EUROPEAN PATENT SPECIFICATION

(11) **EP 1 953 279 B1**
(45) Date of publication and mention of the grant of the patent: **23.07.2014**
(21) Application number: 08001024.2
(22) Date of filing: 21.01.2008
(51) Int. Cl.: D03D 15/00, B60J 10/00

(54) **Reinforcing frame for sealings**
Verstärkungsrahmen für Dichtungen
Cadre de renfort pour joints

(30) Priority: 01.02.2007 IT TO20070072
(43) Date of publication of application: 06.08.2008
(73) Proprietor: FILMAR S.r.l., 10072 Caselle Torinese (TO) (IT)
(72) Inventor: Martinetto, Filiberto, 10072 Caselle Torinese (TO) (IT)
(74) Representative: Di Gennaro, Sergio

(56) References cited:
- EP-A1- 0 175 818
- GB-A- 2 063 975
- US-A1- 2006 177 627

## Description

The present invention relates to a reinforcing frame for sealings.

The present invention will make particular reference, without losing any of its general nature, to a reinforcing frame for sealings for motor vehicles constituted of shaped extruded rubber around the reinforcing frame itself.

In general, well-known kinds of woven reinforcing frames comprise a warp which is made of polyester material, and a weft which is made of metallic material in such a way as to form a web, which is then folded into a U shape in order to be subsequently extruded together with the shaped rubber of the sealing.

The latest regulations regarding the safeguarding of the environment have lead to the progressive replacement of components which are difficult to dispose of, and, similarly, demands have been made which also require an easier method of disposal for the reinforcing frames which have been described above.

From US 2006/0177627 is known a reinforcing frame for fittings, being woven and comprising a warp which is made of polyester and a weft that is produced with a yarn of synthetic material.

The aim of the present invention is to produce a reinforcing frame for sealings which is easy to dispose of.

According to the present invention, a reinforcing frame for sealings will be produced according to claim 1.

The invention will now be described with reference to the attached drawings, which illustrate a non-limiting form of embodiment of the present invention, in which:
- FIGURE 1 shows a schematic view of a first preferred form of embodiment of the reinforcing frame for sealings according to the present invention;
- FIGURE 2 shows a schematic view of a second preferred form of embodiment of the reinforcing frame for sealings according to the present invention;
- FIGURE 3 shows a schematic view of a third preferred form of embodiment of the reinforcing frame for sealings according to the present invention; and
- FIGURE 4 shows a schematic view of a fourth preferred form of embodiment of the reinforcing frame for sealings according to the present invention.

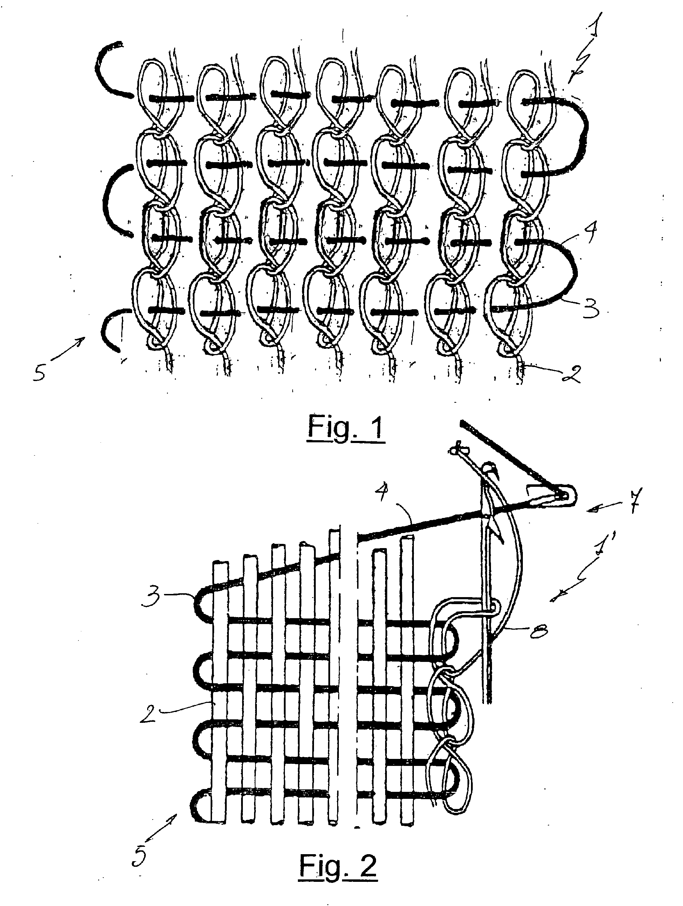

With reference to FIGURE 1, the number 1 indicates a reinforcing frame for sealings in its entirety.

The reinforcing frame 1 is woven and comprises a warp 2 which is made of polyester material, and a weft 3 which is made of a yarn 4 of synthetic material.

The reinforcing frame 1 is woven according to a web 5 which is of a determined width L, and the yarn 4 of synthetic material is conformed according to a serpentine 6 which is of a width which is substantially equal to the width L of the web 5.

In the form of embodiment which is illustrated in FIGURE 1, the web 5 is crochet woven and presents the warp 2 woven to the yarn 4 of synthetic material. The warp 2 is presented according to threads which are parallel to each other and to the web 5, and the number of the threads as well as their reciprocal arrangement also depends on the structural necessities that the reinforcing frame 1 must present when in use.

FIGURE 2 shows a reinforcing frame 1' which is substantially similar to the reinforcing frame 1, from which the reinforcing frame 1' differs due to the fact that the web 5 is woven on a needle loom, in which the warp 2 is moved by leases and is formed by a number of threads which are parallel to each other and to the web 5 itself, and the yarn 4 of synthetic material is woven by means of a sickle 7 with wefts two by two.

In addition, the web 5 comprises an impulse thread 8 for binding the yarn 4 of synthetic material which is held, during the weaving, by a needle.

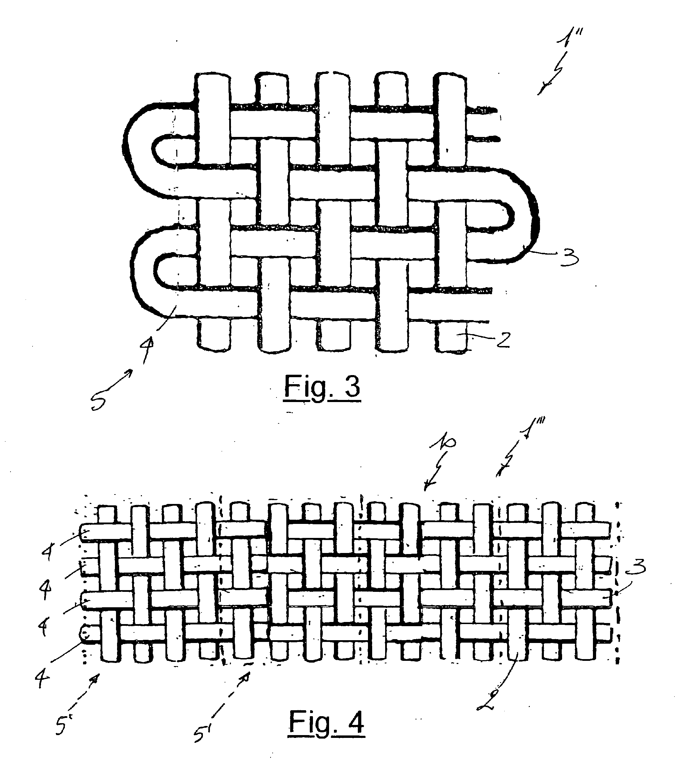

FIGURE 3 shows a reinforcing frame 1" which is substantially similar to the reinforcing frame 1 and the reinforcing frame 1', from which the reinforcing frame 1" differs due to the fact that the web 5 is shuttle woven, or rather the warp 2 is moved by leases and is formed by a number of threads which are parallel to each other and to the web 5 itself, while the yarn 4 of synthetic material is inserted by means of a shuttle, which by moving from right to left and vice versa inserts a single thread of weaving at a time.

In the forms of embodiment of a reinforcing frame for sealings which have been described above, the yarn 4 of synthetic material is made of a single thread and the web 5 is calendered in such a way as to avoid any reciprocal sliding between the warp 2 and the weft 3 by impressing the warp 2 onto the weft, as well as to define a determined thickness of the reinforcing frame itself.

FIGURE 4 shows a reinforcing frame 1"', which still comprises a warp 2 which is made of polyester material, and weft 3 which is made of a yarn 4 of synthetic material, and is woven according to a large roll 10 on any kind of loom whatsoever instead of having the weft 3 shaped according to a serpentine 6 as has been described above.

The roll 10 is subsequently subdivided into webs or strips 5' of a determined width which conforms to the use for which it is intended.

The reinforcing frame 1"', the warp 2 and the weft 3 are calendered in order to avoid any relative sliding and in order to reduce thickness.

In all the alternative forms of embodiment of the reinforcing frame for sealings which have been described above, the yarn 4 of synthetic material may be made, for example, of polyester or of polypropylene with talc filler. In any case, the use of a yarn 4 of synthetic material permits, subsequently, the production of a sealing for vehicles which is totally disposable and which may be recycled.

## Claims

1. Reinforcing frame (1) (1') (1") (1'") for sealings, the reinforcing frame (1) (1')(1")(1'") being woven or crochet woven and comprising a warp (2) which is made of polyester material, and a weft (3) produced with a yarn (4) made of synthetic material;
the reinforcing frame being **characterized in that** the warp (2) and the weft (3) are calendered to each other in order to:
- avoid any relative sliding between the warp (2) and the weft (3) by impressing the warp (2) onto the weft (3), and in order to
- define a determined thickness of the reinforcing frame itself by reducing its thickness.

2. Reinforcing frame according to Claim 1, **characterized by** being woven to form a web (5) which is of a determined width; the yarn (4) of synthetic material being shaped according to a serpentine (6) which is of a width which is substantially equal to the width of the said web (5).

3. Reinforcing frame according to Claim 2, **characterized by** the fact that the said web (5) is crochet woven and presents the warp (2) woven to the weft (3).

4. Reinforcing frame according to Claim 3, **characterized by** the fact that the said web (5) comprises an impulse thread (8) for binding the weft (3), which, during the binding, is retained by a needle.

## Patentansprüche

1. Verstärkungsrahmen (1), (1'), (1"), (1"") für Dichtungen, wobei der Verstärkungsrahmen (1), (1'), (1"), (11"') gewebt oder häkelgalongewirkt ist und einen Kettfaden (2) umfasst, der aus Polyestermaterial besteht, und einen Schussfaden (3), der mit einem Garn (4) erzeugt wird, das aus synthetischem Material besteht,
wobei der Verstärkungsrahmen **dadurch gekennzeichnet ist, dass** der Kettfaden (2) und der Schussfaden (3) aneinander kalandriert sind, um:
jegliches Gleiten des Kettfadens (2) und des Schussfadens (3) im Verhältnis zueinander zu vermeiden, indem der Kettfaden (2) auf den Schussfaden (3) aufgedrückt ist, und um
eine festgelegte Dicke des Verstärkungsrahmens selbst zu definieren, indem dessen Dicke verringert ist.

2. Verstärkungsrahmen nach Anspruch 1, **dadurch gekennzeichnet, dass** er gewebt ist, um eine Bahn (5) zu bilden, die eine festgelegte Breite aufweist, wobei das Garn (4) aus synthetischem Material wie eine Serpentine (6) gebildet ist, deren Breite im Wesentlichen gleich der Breite der Bahn (5) ist.

3. Verstärkungsrahmen nach Anspruch 2, **gekennzeichnet durch** die Tatsache, dass die Bahn (5) häkelgalongewirkt ist und den Kettfaden (2) an den Schussfaden (3) gewebt darstellt.

4. Verstärkungsrahmen nach Anspruch 3, **gekennzeichnet durch** die Tatsache, dass die Bahn (5) einen Impulsfaden (8) zum Binden des Schussfadens (3) umfasst, der während des Bindens von einer Nadel gehalten wird.

## Revendications

1. Armature de renfort (1) (1') (1") (1''') pour éléments d'étanchéité, l'armature de renfort (1) (1') (1") (1"') étant tissée ou réalisée au crochet et comprenant une chaine (2) qui est constituée d'un matériau polyester, et une trame (3) composée d'un fil (4) en matière synthétique ;
l'armature de renfort étant **caractérisée en ce que** la chaine (2) et la trame (3) sont calandrées l'une sur l'autre afin de :
. éviter tout coulissement relatif entre la chaine (2) et la trame (3) par impression de la chaine (2) sur la trame (3), et afin de :
. définir une épaisseur déterminée de l'armature de renfort elle-même en réduisant son épaisseur.

2. Armature de renfort selon la revendication 1, **caractérisée en ce qu'**elle est tissée de manière à former une toile (5) qui a une largeur déterminée ; le fil (4) de matière synthétique ayant la forme d'un serpentin (6) qui a une largeur qui est sensiblement égale à la largeur de ladite toile (5).

3. Armature de renfort selon la revendication 2, **caractérisée en ce que** ladite toile (5) est réalisée au crochet et présente la chaine (2) tissée sur la trame (3).

4. Armature de renfort selon la revendication 3, **caractérisée en ce que** ladite toile (5) comprend un fil à impulsions (8) destiné à border la trame (3), qui, au cours du bordage, est retenue par une aiguille.
